# EUROPEAN PATENT APPLICATION

(11) **EP 3 659 983 A1**
(43) Date of publication of application: **03.06.2020**
(21) Application number: 18209625.5
(22) Date of filing: 30.11.2018
(51) Int. Cl.: C02F 9/00, C02F 11/04, C02F 11/18, C02F 11/121, C02F 11/14, C02F 11/13

(54) **PROCESS FOR THE TREATMENT OF SLUDGE**

(71) Applicant: Nederlandse Organisatie voor toegepast- natuurwetenschappelijk Onderzoek TNO, 2595 DA Den Haag (NL)
(72) Inventor: The designation of the inventor has not yet been filed
(74) Representative: Nederlandsch Octrooibureau

(57) **Abstract**

The present invention concerns a process for the treatment of sludge, comprising (a) optionally subjecting the sludge to a digestion step to obtain biogas or biofuel and digested sludge; (b) mechanically concentrating the optionally digested sludge; (c) subjecting the concentrated sludge to a hydrothermal treatment step at a temperature in the range of 175 - 250 °C, to obtain hydrothermally treated sludge; and (d) dewatering the hydrothermally treated sludge, to obtain a cake and a liquor. The dewaterability in step (d) of the hydrothermally treated sludge was markedly improved.

## Description

### Field of the invention

The present invention relates to a process for the treatment sludge, e.g. originating from a wastewater treatment plant.

### Background art

Processes that concern waste streams comprising organic components often produce watery biomass as a sludge or a slurry and is considered to be a waste stream. The process also applies to manures with various water content and viscosities. For these processes dewatering, especially sludge dewatering, is an essential step as it is too expensive to dispose of sludge in diluted form.

Subjecting wastewater treatment sludge to a hydrothermal treatment in order to improve the digestibility thereof is known in the art. The company CAMBI has developed a steam explosion process, wherein the sludge is subjected to temperatures up to 170 °C, prior to digestion, as disclosed in WO2014/137218. This treatment opens the structure of the sludge, in such a way that it is more easily digested. Advantages reported for the steam explosion process include an increase in biogas yield and reduced odour of the final solid product. However, the drawback of the steam explosion process is that sludge dewatering remains problematic and the final solid product still contains significant amounts of water after a mechanical dewatering step.

Further hydrothermal treatment processes are disclosed in WO 03/043939, US 2007/0095734, US 2131711 and WO 2016/066752, none of which have optimized the hydrothermal treatment conditions for improved hydrothermal treatment (dewaterability) of the hydrothermally treated sludge. WO 2013/162355 discloses a hydrothermal treatment of biomass such as sludge, but expressly states that temperatures above 160 °C are undesirable in terms of digestibility of the aqueous effluent obtained after hydrothermal treatment.

The present invention provides in the need for an improved treatment of sludge, wherein the dewatering capacity of the sludge is improved, without significantly hampering the digestibility of the sludge and affecting the overall biogas yield.

### Summary of the invention

The present inventors have discovered that the hydrothermal treatment of sludge can be improved in order to significantly improve the dewatering capacity of the sludge. The process according to the invention comprises:
(a) optionally subjecting the sludge to a digestion step to obtain biogas or biofuel and digested sludge;
(b) mechanically concentrating the optionally digested sludge;
(c) subjecting the concentrated sludge to a hydrothermal treatment step at a temperature in the range of 175 - 250 °C, to obtain hydrothermally treated sludge; and
(d) dewatering the hydrothermally treated sludge, to obtain a cake and a liquor.

In a preferred embodiment, step (a) is not performed and the sludge is directly subjected to mechanical concentration of step b to obtain the right consistency for step (c). Alternatively, the sludge is digested prior to step (b). In a further preferred embodiment, the liquor obtained in step (d) is recycled to step (a). In a preferred embodiment, the process further comprises a step (e) wherein the liquor is digested to obtain biogas. Alternatively, step (e) is not performed and the liquor is used as deemed fit, e.g. for recovery of certain compounds (humines, phosphates, furfural) or dried into a fertilizer.

### Detailed description

The invention concerns a process for the treatment of sludge, comprising:
(a) optionally subjecting the sludge to a digestion step to obtain biogas or biofuel and digested sludge;
(b) mechanically concentrating the optionally digested sludge;
(c) subjecting the concentrated sludge to a hydrothermal treatment step at a temperature in the range of 175 - 250 °C, to obtain hydrothermally treated sludge; and
(d) dewatering the hydrothermally treated sludge, to obtain a cake and a liquor.

In one embodiment, step (a) is performed and step (b) is performed directly after step (a), without substantial alteration of the digested sludge. In one embodiment, step (c) is performed directly after step (b), without substantial alteration of the dewatered sludge. In one embodiment, step (d) is performed directly after step (c), without substantial alteration of the hydrothermally treated sludge. In one embodiment, a liquor digestion step (e) is performed and step (e) is performed directly after step (d), without substantial alteration of the liquor between step (d) and step (e). The process can also be worded as being for the production of solid sludge cake, wherein the solid sludge cake is obtained as the dried material in step (d), optionally after the further processing steps such as pelletisation. The inventors have found that the solid fuels obtained in the process according to the invention can be more readily dehydrated by mechanical dewatering and more readily pelletized then the products of conventional dry sludge treatment processes.

The invention further concerns a solid sludge cake, obtainable by the process according to the invention. The solid sludge cake according to the invention is preferably characterized as being derived from wastewater treatment sludge. In a preferred embodiment, the sludge cake is sludge pellets, which are obtained after pelletisation. A major advantage of the product according to the invention is the reduced smell, compared to prior art sludge cakes. The smell of (dried) sludge, including sludge that has been subjected to hydrothermal treatment at 170 °C or less, is typically regarded overwhelmingly unpleasant, but is greatly reduced for the products according to the present invention.

The feedstock of the process according to the invention is sludge. In the context of the present invention, sludge may be referred to as "watery biomass" and includes manure, sludge, dredging waste, food production waste, garden waste and mixtures thereof. Specific examples of sludge that can be treated according to the invention include wastewater treatment sludge, fluid manure, industrially peeled potatoes, blended waterplants and the residue from protein extraction. Prior to step (a) these feedstocks may have any moisture content, such as anywhere between 70 - 99.9 wt%. The concentrated sludge that is subjected to step (c) should be fluid and pumpable or malleable, and typically contains 0.1 - 30 wt%, preferably 0.5 - 25 wt%, more preferably 1 - 15 wt%, most preferably 8 - 14 wt% total solids (dry weight based on total weight). Preferably, the sludge is a sludge originating from a wastewater treatment plant or sewage sludge, or is fluid manure.

Prior to being subjected to step (a), the biomass may be pretreated. Such pretreatment may comprise removal of non-biomass such as sand, stones, plastic, etc., by sieving or otherwise, shredding, cutting, chopping and/or screening and the like. The pretreatment may comprises a mechanical pretreatment.

### Step (a)

In the context of the present invention, performing step (a) is not essential although preferably it is performed. Whether or not step (a) can be performed mainly depends whether a (wastewater treatment) plant has a large digestion tank available. If so, it is preferred that step (a) is performed. However, for those plants where no large digestion tank (e.g. above 5000 m³) is available, step (a) can be omitted, in which case the sludge is subjected directly to concentration step (b). Especially when the sludge has a relatively high content of lignocellulosic material, such as sludge from the paper manufacturing industry, the investment on a large digestion tank may be too big for a digestion step to be economically feasible, since lignocellulose is relatively difficult to digest, compared to proteins, lipids, sugars and hemicellulose. Such sludge is still efficiently treated according to the present invention, as the advantages downstream of the hydrothermal treatment step are still obtained. Here, large digestion tank refers to a digestion tank that is large enough to handle the large amounts of sludge and long residence times that are handled by the specific (wastewater treatment) plant in suit.

In case step (a) is performed, the sludge is subjected to a digestion step. Herein, digestion refers to microbial digestion wherein organic compounds in the sludge are converted by microorganisms to valuable products such as biogas or biofuels. Preferably, methane, carbon dioxide and/or alcohols (e.g. ethanol and/or butanol) is produced in step (a), more preferably methane or ethanol, most preferably methane. In case ethanol, butanol and/or any other alcohol is formed, step (a) may also be referred to as a fermentation step (a). In addition to the biogas or biofuels, step (a) affords a solid residue in the form of digested sludge. Such digestion of sludge is well-known in the art and commonly employed in sludge treatment. It may reduce the total volume of the sludge by about 50 % and at the same time produces a valuable product. In a preferred embodiment, step (a) is a digestion step that affords biogas. The biogas formed contains one or more of methane and carbon dioxide, preferably methane.

The digestion may be aerobic or anaerobic, although anaerobic digestion is preferred. In view of the overall aim of the process according to the invention, i.e. to improve the durability and energy efficiency of sludge handling, the use of anaerobic digestion is highly preferred. The biogas formed during anaerobic digestion contains mainly methane, which is an important component of synthetic natural gas (SNG) and thus contributes to improving the durability of society. Aerobic digestion, on the other hand, produces mainly carbon dioxide as product. Although useful for various applications, its value is lower than methane.

The digestion step may also be a yeast fermentation step, wherein alcohols, carbon dioxide or a combination thereof is produced. The fermentation may be aerobic or anaerobic, preferably anaerobic, in view of the overall objective of the invention to generate valuable biomass-based products.

Aerobic or anaerobic digestion and fermentation of sludge is known in the art and can be performed in any way possible. For example, the sludge may be digested at a temperature of 30 - 70 °C for a period of 5 - 60 days.

The biogas or biofuel obtained in step (a) is used as deemed fit, e.g. as green fuel for combined-heat and power, alternatively it can be upgraded for distribution in a natural gas grid. The digested sludge is subjected to step (b).

### Step (b)

In step (b), the optionally digested sludge obtained in step (a) is mechanically concentrated. This step may also be referred to as mechanical dewatering. The dewatering of sludge is well-known in the field of sludge treatment, and can be performed in any way possible. Typical means for dewatering step (b) include centrifuging and filtering. Suitable dewatering devices may be selected from a centrifuge, a decanter centrifuge, a membrane filter press, a belt filter press, a dewatering screw, a drum thickener and a gravity belt, preferably the dewatering apparatus is a centrifuge, because it provides a continuous flow and can be adjusted to produce a concentrated sludge with a variable moisture content.

The concentrated sludge, which may also be referred to as dewatered sludge, typically takes the form of a slurry or a paste. The total solid content is typically in the range of 0.1 - 30 wt%, preferably 0.5 - 25 wt%, more preferably 1 - 15 wt%, most preferably 8 - 14 wt%.

Step (b) affords a liquid effluent, which is used as deemed fit. Typically the liquid effluent is returned to the wastewater treatment plant and either discharged or subjected to another round of treatment in order to remove traces of organic pollutants that may end up in the liquid effluent. The liquid effluent may also be used as a fertilizer in agriculture or it may be subjected to nutrient extraction, e.g. by chemical treatment. This is especially relevant in case the sludge is manure or any other feedstock that may not be readily disposed of as waste. The dewatered sludge is subjected to step (c).

### Step (c)

The crucial step in the present invention is step (c), wherein the dewatered sludge is subjected to a hydrothermal treatment. The inventors have found that careful selection of the temperature at which this step is performed provides a hydrothermally treated sludge with optimal properties, especially in terms of dewaterability. The hydrothermal treatment of step (c) is performed at a temperature in the range of 175 - 250 °C

The hydrothermal treatment of step (c) may also be referred to as a Torwash step, "torrefying" or "wet torrefying". Thus, step (c) is not a steam explosion step. Also, it is preferred that step (c) is not followed by a steam explosion step. The Torwash process is known to the skilled person from e.g. WO 2013/162355, although in the process described in this section, a pre-wash can be omitted without jeopardizing the overall efficacy of the process. A typical Torwash process includes contacting a solid phase and a liquid phase. However, the process according to the present invention utilizes the concentrated sludge originating from step (b) as feedstock for the Torwash step, and this feedstock contains sufficient water to avoid the need of a separate liquid phase. Depending on the consistency of the concentrated sludge, some liquid phase may be added to the concentrated sludge, e.g. in order to improve its processability or pumpability. Some acid may be added to the material to be Torwashed, e.g. an amount of acid to lower the pH of the sludge slurry to a pH in the range of 3 - 7, preferably 4 - 6. The inventors found that such a reduction of the pH leads to an improved dewaterability in step (d). Notably, some acid was found to be liberated during the Torwash process and the addition of some acid upfront was found to accelerate this process. With the same duration and temperature, more severely treated material is obtained, which was found to give the improved dewaterability. Preferably, no further additives are added to the sludge slurry, in particular the use of flocculation agents prior to the Torwash of step (c) was found unnecessary or even to hamper the performance of step (c). In one advantageous embodiment, no oxidizing agents are added prior to or during step (c). Thus, the sludge slurry originating from step (b) is treated at the required temperature in order to obtain hydrothermally treated sludge, which may also be referred to as "torrefied sludge" or "torrefied material". The liquid phase typically comprises or is water, and may also be referred to as aqueous phase.

The liquid to solid (L/S) ratio in the mixture that is subjected to step (c) is preferably in the range of 3 - 100, more preferably 3 - 40, even more preferably 6 - 15, most preferably 7 - 12. Such L/S ratios are readily obtained in step (b), such that no further adjustment by addition of water is needed. Excellent results have been obtained with L/S ratios in the range of 8 - 12, preferably where the solids are just submerged. The duration of step (c) is typically in the range of 5 min - 5 h, preferably 10 min - 2 h, more preferably 15 min - 1 h, most preferably 20 - 45 min. Step (c) is typically performed at elevated pressure in order to keep the liquid phase liquid. A typical pressure is slightly above the steam pressure of the operational temperature, and typically is in the range of 4 - 50 bar, preferably 12 - 25 bar.

The temperature at which the contacting of step (c) is performed should be in the range of 175 - 250 °C, preferably in the range of 177 - 210 °C, preferably in the range of 180 - 195 °C. The inventors found that performing step (c) slightly above 170 °C, which has been suggested as maximum temperature for conventional hydrothermal treatment of sludge, possibly after digesting and/or dewatering steps, causes a structural changes within the sludge which have not been observed to date. These structural changes ensure that the hydrothermally treated sludge is more easily dewatered in step (d). A further advantage of the hydrothermal treatment according to the invention is that the liquor obtained in step (d) contains a higher percentage of dissolved digestible organic matter, compared to conventional process for the hydrothermal treatment of sludge. As such, in case the liquor is subjected to a digestion step, more digestible organic matter is fed to that digestion step, as such increasing the biogas yield. In that light, it is preferred that the liquor is subjected to a sludge digestion step (e).

It has been postulated in the art that surpassing a temperature of 170 °C is undesirable, as that would jeopardize the digestibility of the organic matter in the liquor obtained in step (d). Based on that prejudice, no attempts have been done to perform the hydrothermal treatment at a temperature in the range of 175 - 250 °C. Thus, step (c) should be performed at a temperature in the range of 175 - 250 °C. Keeping the temperatures just below 175 °C, such as at 170 °C, gives a sharp decline in the dewaterability of the hydrothermally treated sludge. Temperatures above 250 °C are highly undesirable because the digestibility of the organic matter in the liquor and the biogas yield in step (e) is drastically reduced. Furthermore, higher temperatures enforce stricter requirements on the reactors and increase overall costs of the process. These drawbacks are minimized at temperatures below 250 °C, especially below 210 °C. An especially preferred temperature range is 180 - 195 °C, as the advantages on sludge dewaterability are observed and at the same time the biogas yield during digestion of the liquor is optimal.

Step (c) affords hydrothermally treated sludge, typically in the form of a slurry with a lowered viscosity compared to the feedstock of step (c). This hydrothermally treated sludge is subjected to step (d). Before being subjected to step (d), the sludge is typically cooled down to a temperature in the range of 30 - 60 °C, preferably in the range of 40 - 55 °C, most preferably about 50 °C. Such cooling of the slurry is preferably performed in a heat exchanger in connection with the dewatered sludge that originated from step (b), which needs to be heated to the temperature at which step (c) is performed. As such, the thermal energy that is provided in step (c) is efficiently used and the overall costs of the process are minimized.

### Step (d)

In step (d), the hydrothermally treated sludge is subjected to a liquid/solid separation. In other words, the sludge is dewatered, which may also be referred to as dewatering. Such dewatering can be accomplished in any manner known in the art, such as centrifugation, filtration, draining, decantation and/or mechanically dewatering. Such separation of liquid and solid products is preferably enhanced, for example by pressing, squeezing or centrifuging the solid material using a porous mould to force out any remaining liquids inside the solid material. Most preferably, a press is used to dewater the hydrothermally treated sludge.

Within the context of the present invention, the dewatering may be enhanced by the addition of a flocculation agent, as is common in the art. However, the inventors found that by virtue of the improved dewaterability of the hydrothermally treated sludge, this is not required. Thus, in one embodiment, no flocculants are added prior to or during step (d), in particular no aluminium salts, iron salts or polyelectrolytes are added. Especially the addition of polyelectrolyte prior to step (d) has been found to negatively affect the dewaterability of the hydrothermally treated sludge. Thus, in case a flocculant would be added prior to step (d), it is preferred that the flocculant is not a polyelectrolyte, preferably it is selected from aluminium salts and iron salts.

Preferably, the dewatering of step (d) is performed at elevated temperature, such as above 30 °C, preferably in the range of 40 - 250 °C or 40 - 210 °C. At elevated temperature, the viscosity of the hydrothermally treated sludge is reduced, such that a better dewatering result can be achieved at the same pressure. In one embodiment, the temperature at which step (d) is performed is in the range of 30 - 60 °C, preferably 40 - 55 °C, most preferably about 50 °C. Such temperatures match the temperature of the hydrothermally treated sludge when it has been cooled in between step (c) and step (d). In an alternative embodiment, the temperature at which step (d) is performed is in the range of 175 - 250 °C, preferably in the range of 177 - 210 °C, preferably in the range of 180 - 195 °C. Such temperatures match the temperature of the hydrothermally treated sludge when it is not been cooled but directly obtained from step (c).

The duration of step (d) is preferably in the range of 1 - 15 minutes, more preferably 2 - 10 minutes. It is highly unexpected that such rigorous dewatering can be achieved in such a short period, even without the addition of flocculants or other additives that facilitate dewatering of sludge.

After separation, the total solid content of the dried sludge can be as high as 40 - 90 wt%, typically 55 - 85 wt%, or even 60 - 70 wt%. Such low moisture contents are unprecedented in the art of sludge dewatering. Conventional processes wherein the hydrothermally treated sludge is dewatered arrive at a total solids content of at most 30 to 35 wt%, which is only possible when flocculants are used. The present invention thus avoids the need of flocculants and at the same time improves the dewaterability of the hydrothermally treated sludge.

The dewatered material obtained in step (d), which is also referred to as "cake", may be further processed, e.g. into pellets by a pelletisation step, optionally including a milling step. Drying and pelletizing the solids in the context of a Torwash process is well-known in the art. The liquid effluent of step (d), herein also referred to as the liquor, is preferably subjected to a digestion step (e).

### Step (e)

The process according to the invention preferably comprises a digestion step (e), wherein the liquor originating from step (d) is subjected to digestion. Compared to conventional liquors obtained from hydrothermally treated sludge, the liquor according to the present invention affords an increased yield of biogas or biofuel. The digestion of step (e) may involve aerobic or anaerobic digestion and fermentation, and the same principles as for digestion step (a) apply. Preferably, step (e) involves anaerobic digestion and a biogas comprising methane is formed. Typically, step (e) does not afford a solid residue, but if it is formed it may advantageously be mixed with the solid residue (digested sludge) of step (a), either prior to, during or after step (b), and together fed to step (c).

Digestion step (e) can be the same sludge digestion step as step (a), in which case the liquor is recycled to this step, or a separate sludge digestion step, in which case a second digester is implemented. Thus, in one embodiment, the liquor of step (d) is fed to the same digester as the one in which step (a) is performed. This is advantageous for simplicity of the system and avoidance of unnecessary steps. However, for optimal biogas production, the liquor of step (d) is preferably fed to a separate digester, designed for handling solids-free feed and populated with microorganisms that are adapted for digesting hydrothermally treated feedstock. The separate digester may be any digester, preferably a UASB-type digester or any other type of digester specifically designed to handle solids-free feed.

### Example

In this Torwash test, sewage sludge (secondary sludge from a wastewater treatment plant which was been dewatered in a centrifuge) is fed to an autoclave reactor as received (dry matter content - 7.17 wt%). The reactor has a capacity of 2 L, and it is filled with about 1.4 - 1.5 L of sludge. The mixture is brought to the desired temperature by mean of electrical heating, while being stirred at 100 rpm with an anchor stirrer. As the temperature increases, the reactor pressure rises autogenously. Once the target temperature is reached, the mixture is kept at the same conditions for 30 minutes, still being stirred at 100 rpm. At the end of this period, the heating is stopped and the reactor is actively cooled through a cooling water coil system. Once the rector mixture is at room temperature, the reactor is emptied and the mixture is centrifuged at 3000 rpm for 10 minutes. After centrifugation, the supernatant is separated from the precipitate by decantation. After this initial separation, a sample of the precipitate is pressed with a carver die hydraulic laboratory press at a maximum pressure of 65 bar. The resulting compacted material or 'cake' is dried over-night within an air forced oven at 105 °C. The mass of the cake is measured before and after drying to determine the cake dry matter content of the pressed cake (weight after oven drying / weight before oven drying).

The dry matter contents of the cake for four different reaction temperatures (150 - 170 - 190 - 210 °C) are shown in the table below. When the reaction temperature increases from 150 °C to 170 °C and from 190 °C to 210 °C, the increase in dry matter content of the pressed cake is less than 10 wt%, while increasing the reaction temperature from 170 °C to 190 °C gives an increase in dry matter content of over 25 wt%, i.e. a greater than 2.5-fold increase compared to the other temperature intervals.

| Reaction Temperature (°C) | Cake dry matter content (wt%) |
|---|---|
| 150 | 20.7 |
| 170 | 30.2 |
| 190 | 55.9 |
| 210 | 64.0 |

In these anaerobic digestion tests the liquid product of the hydrothermal treatment step (the supernatant) is used as feedstock. The digestion tests are conducted in triplo, using three different reactors. The samples are diluted to achieve a chemical oxygen demand (COD) concentration of less than 2 g/l with a COD-free solution of nutrients. Ph is adjusted to 6.7 using a sodium hydrogen carbonate buffer, to prevent acidification. During operations, the pH is controlled at 7.0 (±0.1). Granular sludge from paper industry is employed as inoculum. The tests are run for 21 consecutive days, measuring each day the cumulative methane yield. The resulting methane yields from the four different hydrothermal treatment temperatures (150 - 170 - 190 - 210 °C) are given in the table below.

| Reaction Temperature (°C) | Methane yield (ml/gODM) |
|---|---|
| 150 | 135 |
| 170 | 173 |
| 190 | 167 |
| 210 | 150 |

## Claims

1. A process for the treatment of sludge, comprising:
(a) optionally subjecting the sludge to a digestion step to obtain biogas or biofuel and digested sludge;
(b) mechanically concentrating the optionally digested sludge;
(c) subjecting the concentrated sludge to a hydrothermal treatment step at a temperature in the range of 175 - 250 °C, to obtain hydrothermally treated sludge; and
(d) dewatering the hydrothermally treated sludge, to obtain a cake and a liquor.

2. The process according to embodiment 1, wherein the sludge originates from a wastewater treatment plant.

3. The process according to any one of the preceding claims, wherein the liquid to solid (L/S) ratio in the mixture that is subjected to step (c) is in the range of 3 - 100, preferably in the range of 7 - 12.

4. The process according to any of the preceding claims, wherein the drying of step (d) is performed by mechanical dewatering in order to obtain a cake having a total solid content in the range of 40 - 90 wt%, preferably 55 - 65 wt%.

5. The process according to any of the preceding claims, further comprising a step (e) wherein the liquor originating from step (d) is subjected to digestion.

6. The process according to any of the preceding claims, wherein step (a) and/or (e) involves anaerobic digestion to form a biogas comprising methane.

7. The process according to any of the preceding claims, further comprising processing of the dried hydrothermally treated sludge into pellets by pelletizing.

8. The process according to any of the preceding claims, wherein step (c) is performed at a temperature in the range of 177 - 210 °C, preferably in the range of 180 - 195 °C.

9. The process according to any of the preceding claims, wherein step (b) is performed at a temperature in the range of 40 - 80 °C.
